# EUROPÄISCHE PATENTSCHRIFT

(11) **EP 1 506 609 B1**
(45) Veröffentlichungstag und Bekanntmachung des Hinweises auf die Patenterteilung: **09.05.2007**
(21) Anmeldenummer: 03747385.7
(22) Anmeldetag: 06.05.2003
(51) Int. Cl.: H02K 15/02, H02K 15/095

(54) **VERFAHREN ZUM BEWICKELN EINES MEHRPOLIGEN STATORS**
METHOD FOR WINDING A MULTIPOLE STATOR
PROCEDE D'ENROULEMENT D'UN STATOR MULTIPOLAIRE

(30) Priorität: 06.05.2002 CH 763022002
(43) Veröffentlichungstag der Anmeldung: 16.02.2005
(73) Patentinhaber: ATS Wickel- und Montagetechnik AG, 5436 Würenlos (CH)
(72) Erfinder: EUGSTER, Beat, CH-8113 Boppelsen (CH)
(74) Vertreter: Wiedmer, Edwin
(86) Internationale Anmeldenummer: PCT/CH2003/000291
(87) Internationale Veröffentlichungsnummer: WO 2003/094325

(56) Entgegenhaltungen:
- EP-A- 1 014 536
- US-A- 5 570 503

## Beschreibung

Die Erfindung betrifft ein Verfahren zum Bewickeln eines mehrpoligen Stators nach dem Oberbegriff von Anspruch 1.

Im Automobilbau ersetzen elektronisch kommutierte Elektromotoren in zunehmendem Maße die bis anhin bekannten Kollektormotoren. Von ihrer Bauart wird zwischen Innenläufer- und Aussenläufermotoren unterschieden. Der Blechschnitt des Stators eines Innenläufermotors entspricht annähernd dem Blechschnitt eines Asynchronmotors.

Bei einem aus der US-A-5 570 503 bekannten Verfahren der eingangs genannten Art werden bewickelte Pole über Feder-Nut-Verbindungen an den Innenseite eines Rückschlussrings befestigt.

Wünschenswert bei einem Stator eines Innenläufermotors ist das Aufbringen einer gleichmässig über die gesamte Länge jedes Statorpols verteilten, möglichst lagenweisen Wicklung.

Eine heute übliche Wickelvorrichtung weist eine als Hohlwelle ausgebildete Wickelstange auf, an deren Ende eine oder mehrere rechtwinklig angeordnete Drahtführerdüsen angebracht sind. Die Wickelstange ist derart gesteuert, dass die Drahtführerdüsen mit dem austretenden Wickeldraht eine Hubbewegung und der Stator eine Schwenkbewegung um etwa eine Polteilung ausführt. Dadurch wird der Draht in einer annähernd rechteckigen Wickelbahn um den entsprechenden Pol geführt.

Damit sich die Wicklung nicht gehäuft an einer Stelle aufbaut, ist eine zusätzliche Bewegung der Drahtführerdüsen in radialer Richtung hin und zurück erforderlich. Eine derartige Vorrichtung ist in der EP-A-1 076 401 offenbart.

Eine andere Wickelvorrichtung ist aus der EP-A-1 283 585 bekannt. Die dort beschriebene Wickelvorrichtung kann auf einfache Weise umgerüstet werden und ist zum gleichzeitigen Umwickeln mehrerer Pole eines Stators geeignet.

Die beiden vorstehend erwähnten Wickelverfahren werden allgemein als Nadel-Wickelverfahren bezeichnet.

Das direkte Bewickeln mehrpoliger Statoren im Nadel-Wickelverfahren setzt eine gewisse Breite der Nutschlitze voraus. Es war daher bis anhin nicht möglich, Statoren mit Nutschlitzen von weniger als etwa 3 mm direkt zu bewickeln.

Zur Lösung des vorstehend genannten Problems wird in der WO-A-99 33 157 vorgeschlagen, die Pole einzeln auf klassischen Spulenwickelmaschinen mehr oder weniger lagenweise zu bewickeln und anschliessend in einen Rückschlussring einzusetzen. Dadurch wird eine Lagenwicklung mit hohem Füllgrad möglich, und der Nutschlitz kann sehr klein gehalten werden. Ein gravierender Nachteil dieser Lösung liegt jedoch darin, dass die Verbindung der einzelnen Polwicklungen erst nach dem Einfügen der bewickelten Pole in den Stator oder Rückschlussring von Hand erfolgen kann.

Der Erfindung liegt die Aufgabe zugrunde, ein Verfahren zum Bewickeln von mehrpoligen Innenläuferstatoren zu schaffen, welches Wicklungen mit hohem Nutfüllgrad und kleinsten Nutschlitzen zwischen den Polen ermöglicht, und bei welchem die Verschaltung der einzelnen gewickelten Spulen im gleichen Arbeitsgang erfolgen kann.

Zur erfindungsgemässen Lösung der Aufgabe führt ein Verfahren mit den Merkmalen von Anspruch 1.

Das erfindungsgemässe Verfahren ermöglicht eine maximale Nutfüllung, da die zu bewickelnden Statorpole im Hilfswerkzeug einen verhältnismässig grossen gegenseitigen Abstand aufweisen, so dass genügend Platz für die Wickelnadel vorhanden ist und der üblicherweise für das Wickeln erforderliche Abstand zwischen benachbarten Spulen praktisch auf Null verringert werden kann. Dadurch werden die Eisenverluste vermindert und die Leistung des Motors wird erhöht. Die Reduzierung des Luftspaltes zwischen den bewickelten Polen führt zudem zu einer Verringerung des Rastmoments am Anker, was beispielsweise bei elektrischen Servolenkungen von Bedeutung ist.

Das Bewickeln der Pole wird bevorzugt mit einem sogenannten Nadel-Wickelverfahren durchgeführt.

Zweckmässigerweise sind im Hilfswerkzeug parallel zu einer Hilfswerkzeugachse hinterschnittene Längsnuten zur Aufnahme eines von den Polen abragenden Federteils angeordnet, und das Einsetzen der Pole erfolgt durch Einschieben der Federteile in die Längsnuten von einer Stirnseite des Hilfswerkzeuges parallel zur Hilfswerkzeugachse.

In gleicher Weise sind im Rückschlussring parallel zur Stator- oder Rückschlussringachse hinterschnittene Führungsnuten zur Aufnahme des von den Polen abragenden Federteils angeordnet, und das Einsetzen der Pole erfolgt durch Einpressen der Federteile in die Führungsnuten von einer Stirnseite des Rückschlussrings parallel zur Statorachse.

Bevorzugt weisen die Längs- bzw. Führungsnuten und die Federteile der Pole einen schwalbenschwanzförmigen Querschnitt auf.

Vor dem Einsetzen der Pole in das Hilfswerkzeug werden diese mit einem beispielsweise aus Kunststoff gespritzten Spulenkörper bestückt. Dieser Spulenkörper weist einerseits einen zentralen Wickelbereich zur Aufnahme der gegen den Pol isolierten Wicklung auf und dient andererseits der Befestigung eines Anschlussterminals und der Führung und Isolation der Verschaltdrähte gegen den Rückschlussring.

Zweckmässigerweise erfolgt das Verschalten von Anschlussdrähten der Spulen unmittelbar nach dem Bewickeln der Pole im Hilfswerkzeug. Dies hat den Vorteil, dass die Verbindungsdrähte zwischen den einzelnen Spulen beim nachfolgenden Verschieben der Pole auf die der Anordnung im Rückschlussring entsprechende Position eine Zugentlastung erfahren.

Bevorzugt erfolgt das Bewickeln der Pole und das Verschalten der Spulen in einem einzigen Arbeitsgang.

Das Verschweissen der Anschlussdrähte wird bevorzugt ebenfalls im Hilfswerkzeug, jedoch in einer separaten Arbeitsstation durchgeführt.

Ein bevorzugter Verfahrensablauf weist die folgenden Einzelschritte auf:
- Bestücken des Hilfswerkzeugs mit den einzelnen Polen
- Wickeln und Verschalten
- Kontaktieren der Anschlussdrähte (z.B. Schweissen, Löten oder Crimpen)
- Übernahme der Pole aus dem Hilfswerkzeug in eine Positioniervorrichtung
- Zusammenschieben der Pole innerhalb der Positioniervorrichtung in ihre Endposition
- Einpressen der Pole in den Rückschlussring

Zur Durchführung des vorstehend beschriebenen Verfahrensablaufs werden zweckmässigerweise die nachfolgenden Stationen durchlaufen.
- Station 1:: Maschine zum Fügen der einzelnen Pole in das Hilfswerkzeug
- Station 2:: Wickelmaschine zum Wickeln, Schalten und Anhängen der Drähte
- Station 3:: Maschine zum Verschweissen der Drähte
- Station 4:: Maschine zum Herauslösen der bewickelten Pole aus dem Hilfswerkzeug, Zusammenschieben und Fügen der verschalteten und verschweissten Pole in den Rückschlussring

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 einen einzelnen Pol eines Stators zum Einsetzen in einen Rückschlussring;
- Fig. 2 die Draufsicht auf den Pol von Fig. 1 in Blickrichtung A;
- Fig. 3 die Stirnansicht des Pols von Fig. 1 in Blickrichtung B;
- Fig. 4 eine Seitenansicht eines Spulenkörpers für einen Statorpol;
- Fig. 5 die Stirnansicht des Spulenkörpers von Fig. 4 in Blickrichtung C;
- Fig. 6 die Draufsicht auf den Spulenkörper von Fig. 4 in Blickrichtung D;
- Fig. 7 die Stirnansicht eines Rückschlussrings in Richtung der Statorachse;
- Fig. 8 die Draufsicht auf ein Hilfswerkzeug mit eingesetzten, mit je einem Spulenkörper bestückten Polen;
- Fig. 9 die Anordnung von Fig. 8 mit bewickelten Pole und verschalteten Spulen;
- Fig. 10 ein Rückschlussring mit den eingesetzten bewickelten Polen und mit verschalteten Spulen entsprechen der in Fig. 9 gezeigten Anordnung.

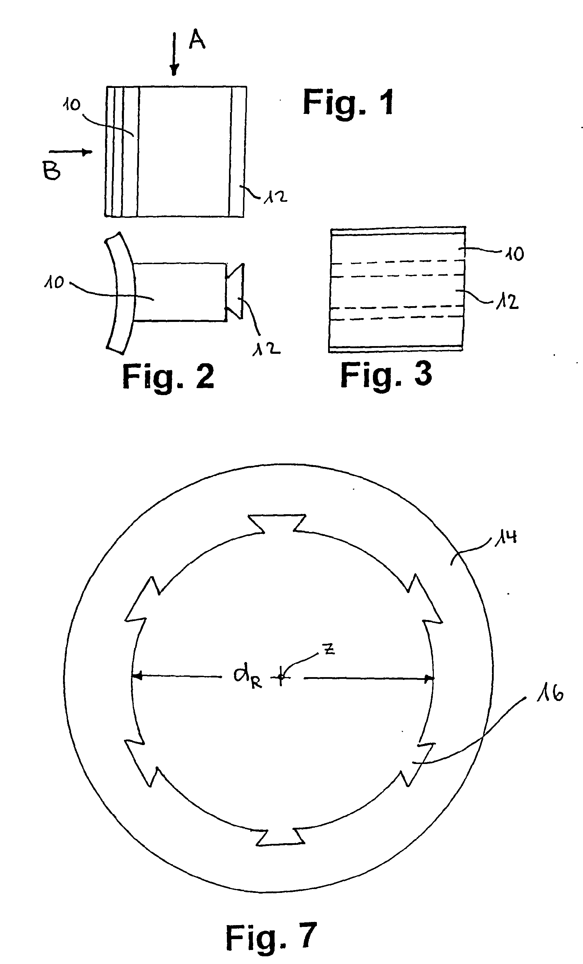

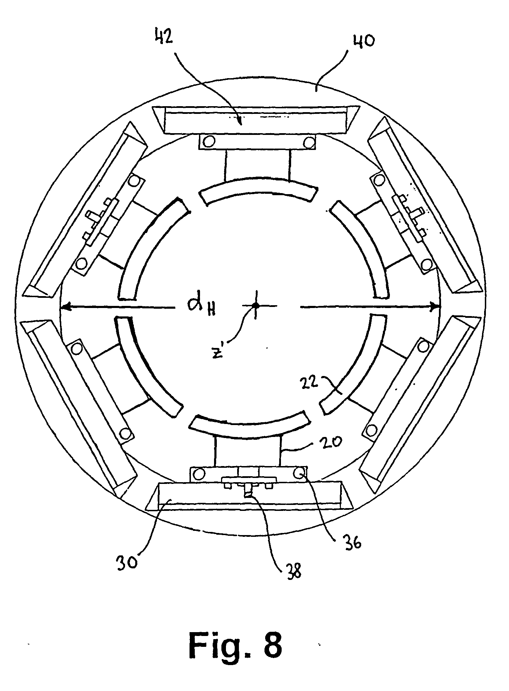

Ein in den Fig. 1 bis 3 gezeigter, beispielsweise aus einzelnen Blechlamellen durch Stanzpaketieren hergestellter Pol 10 weist an einem Ende ein Federteil 12 mit einem schwalbenschwanzförmigen Querschnitt als Verbindungselement zu einem in Fig. 7 dargestellten, ebenfalls aus einzelnen Blechlamellen durch Stanzpaketieren hergestellten Rückschlussring 14 auf. Am inneren Umfang des Rückschlussrings 14 sind parallel zur Stator- bzw. Rückschlussringachse z verlaufende hinterschnittene Führungssnuten 16 angeordnet. Die hinterschnittenen Führungsnuten 16 im Rückschlussring 14 haben einen dem Querschnitt des Federteils 12 entsprechenden schwalbenschwanzförmigen Querschnitt.

Federteil 12 und Führungsnut 16 sind so aufeinander abgestimmt, dass sich die Federteile 12 in die Führungsnuten 16 einpressen lassen, so dass zwischen den Polen 10 und dem Rückschlussring 14 eine form- und kraftschlüssige Verbindung entsteht. Der Rückschlussring 14 mit eingesetzten Polen 10 wird auch als Statorpaket bezeichnet.

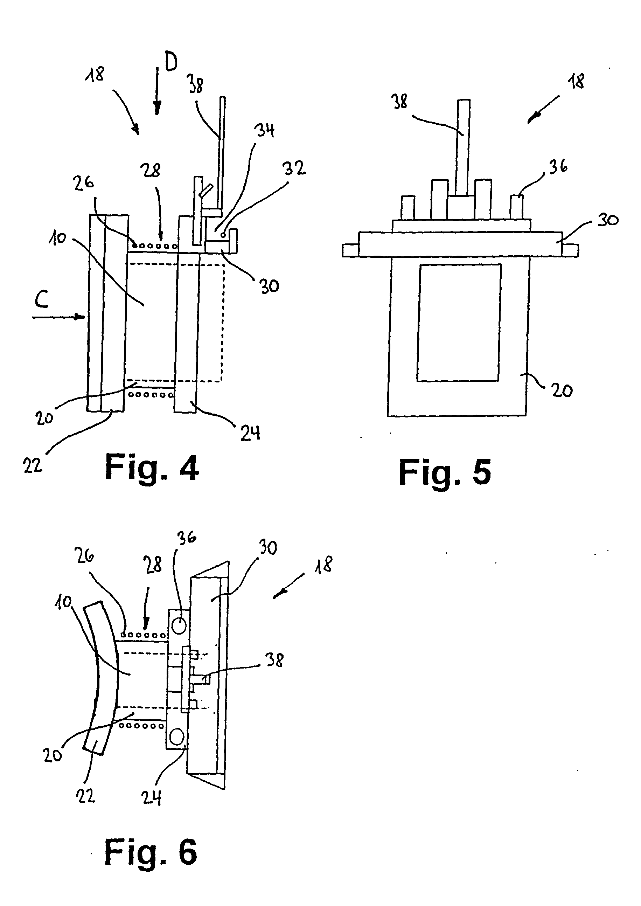

Die Fig. 4 bis 6 zeigen einen Spulenkörper 18, mit welchem jeder einzelne Pol 10 bestückt wird. Der Pol 10 ist in den Fig. 4 und 6 durch gestrichelte Linien angedeutet. Der beispielsweise aus Kunststoff gespritzte Spulenkörper 18 weist einen den Pol 10 umhüllenden zentralen Wickelbereich 20 mit einem einseitig angeformten Innenflansch 24 auf. Ein Aussenflansch 22 wird von dem dem Federteil 12 entgegengesetzten Ende des Pols 10 gebildet. Zwischen den beiden Flanschen 22, 24 wird Draht 26 zu einer Spule 28 gewickelt. Der Innenflansch 24 liegt der inneren Umfangfläche des Rückschlussrings 14 an, der Aussenflansch 22 begrenzt den vom Rückschlussring 14 abragenden zentralen Wikkelbereich 20. Ein vom Innenflansch 24 abragender Isoliersteg 30 liegt bei eingesetztem Pol 10 der Stirnseite des Rückschlussrings 14 auf und bildet die Isolation für einen Verschaltdraht 32.

Der Isoliersteg 30 ragt an seinem freien Ende unter Bildung einer Führungsrinne 34 für den Verschaltdraht 32 rechtwinklig nach oben ab. Zusätzlich ragen vom Innenflansch 24 Zapfen 36 zur Führung des Verschaltdrahtes 32 auf. An seinen freien Enden ist der Isoliersteg 30 derart abgewinkelt, dass die einzelnen Isolierstege 30 praktisch den gesamten Rückschlussring 14 überdecken. Ein Anschlussterminal 38 ist in den Innenflansch 24 eingepresst.

Fig. 8 zeigt ein Hilfswerkzeug 40, dessen äussere Gestalt etwa derjenigen des Rückschlussrings 14 entspricht, wobei der Innendurchmesser d_{H} des Hilfswerkzeugs 40 grösser ist als Innendurchmesser d_{R} des Rückschlussrings 14. Am inneren Umfang des Hilfswerkzeugs 40 sind den Führungsnuten 16 entspre-' chende Längsnuten 42 parallel zur Hilfswerkzeugachse z' angeordnet, in welche die mit je einem Spulenkörper 18 bestückten Pole 10 mit dem Federteil 12 einzeln eingesetzt sind.

In der in Fig. 8 gezeigten Anordnung des Hilfswerkzeugs 40 mit darin eingesetzten Polen 10 mit Spulenkörper 18 erfolgt das Bewickeln der Pole 10 in den einzelnen zentralen Wickelbereichen 20 in einer Nadel-Wickelmaschine. Nach dem Bewickeln der Pole 10 werden die einzelnen Spulen 28 über deren Enden miteinander verbunden und die Anschlussenden mit dem Anschlussterminal 38 verschweisst.

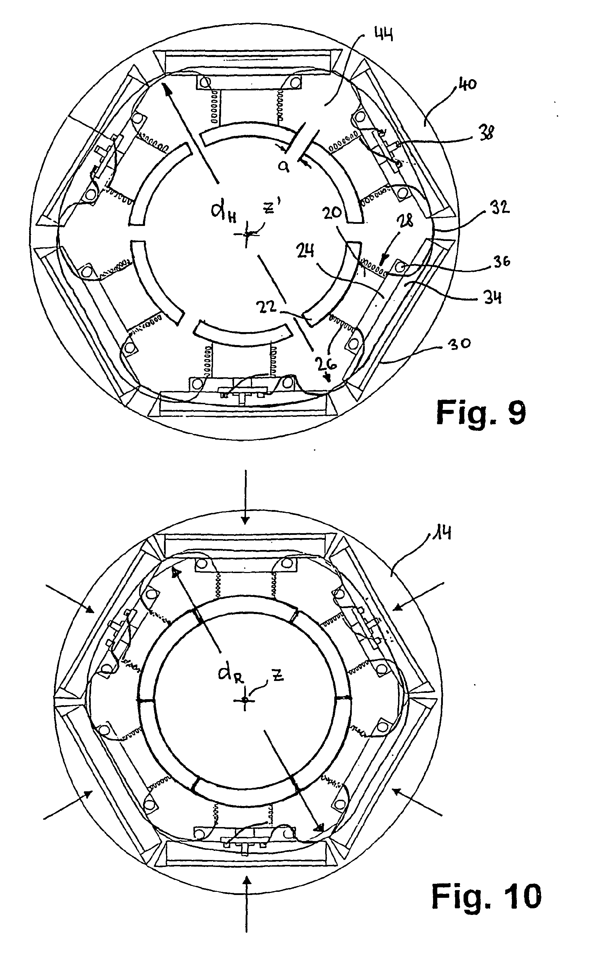

Fig. 9 zeigt die in Fig. 8 dargestellte Anordnung nach vollständiger Bewicklung und Verschaltung. Bei Betrachtung der Fig. 8 und 9 wird ohne weiteres verständlich, dass die Öffnung der Nutschlitze 44 bzw. der Abstand a zwischen den Aussenflanschen 22 von zwei benachbarten Spulenkörpern 18 so eingestellt werden muss, dass die Wickelnadel zur Bewicklung der Pole 10 ungehindert in die Nutschlitze 44 eingeführt werden kann.

Nach dem Wickel- und Verschaltvorgang werden die vorgefertigten und bereits verschalteten Pole aus dem Hilfswerkzeug 40 geschoben und mittels einer in der Zeichnung nicht dargestellten Vorrichtung auf die der Anordnung im Rückschlussring 14 entsprechende Position radial nach innen verschoben und anschliessend in Richtung der Stator- bzw. Rückschlussringachse z in den Rückschlussring 14 gepresst.

Das Zusammenschieben der Pole vom grösseren Innendurchmesser d_{H} des Hilfswerkzeugs 40 auf den kleineren Innendurchmesser d_{R} des Rückschlussrings 14 bewirkt eine Zugentlastung des Verbindungsdrahtes zwischen den einzelnen Spulen. Gleichzeitig verringert sich auch der Abstand zwischen benachbarten Polen.

## Patentansprüche

1. Verfahren zum Bewickeln eines mehrpoligen, mit nach innen gerichteten Polen (10) ausgestatteten Stators einer elektrischen Maschine, bei welchem Verfahren Drahtspulen (28) um die einzelnen Pole (10) gewickelt und die bewickelten Pole (10) nachfolgend in einen Rückschlussring (14) eingepresst werden,
**dadurch gekennzeichnet, dass**
die Pole (10) vor dem Wickelvorgang an der Innenseite eines dem Rückschlussring (14) etwa entsprechenden gestalteten Hilfswerkzeugs (40) befestigt werden, wobei das Hilfswerkzeug (40) einen gegenüber dem Innendurchmesser (d_{R}) des Rückschlussrings (14) grösseren Innendurchmesser (d_{H}) aufweist, die im Hilfswerkzeug (40) gehaltenen Pole (10) bewickelt werden, die Pole (10) nach dem Wickelvorgang mit einer Hilfseinrichtung aus dem Hilfswerkzeug (40) genommen, auf die der im Rückschlussring (14) vorgesehenen Anordnung der Pole (10) entsprechende Position radial nach innen verschoben und nachfolgend in den Rückschlussring (14) eingesetzt werden.

2. Verfahren nach Anspruch 1, **dadurch gekennzeichnet, dass** das Bewickeln der Pole (10) mit einem Nadel-Wickelverfahren durchgeführt wird.

3. Verfahren nach Anspruch 1 oder 2, **dadurch gekennzeichnet, dass** im Hilfswerkzeug (40) parallel zu einer Hilfswerkzeugachse (z') hinterschnittene Längsnuten (42) zur Aufnahme eines von den Polen (10) abragenden Federteils (12) angeordnet sind und das Einsetzen der Pole (10) durch Einschieben der Federteile (12) in die Längsnuten (42) von der Stirnseite des Hilfswerkzeugs (40) parallel zur Hilfswerkzeugachse (z') erfolgt.

4. Verfahren nach Anspruch 3, **dadurch gekennzeichnet, dass** im Rückschlussring (14) parallel zur Statorachse (z) hinterschnittene Führungsnuten (16) zur Aufnahme des von den Polen (10) abragenden Federteils (12) angeordnet sind und das Einsetzen der Pole (10) durch Einpressen der Federteile (12) in die Führungsnuten (16) von einer Stirnseite des Rückschlussrings (14) parallel zur Statorachse (z) erfolgt.

5. Verfahren nach Anspruch 3 und 4, **dadurch gekennzeichnet, dass** die Längs- bzw. Führungsnuten (16,42) und die Federteile (12) der Pole (10) einen schwalbenschwanzförmigen Querschnitt aufweisen.

6. Verfahren nach einem der Ansprüche 1 bis 5, **dadurch gekennzeichnet, dass** die Pole (10) vor dem Einsetzen in das Hilfswerkzeug (40) mit einem Spulenkörper (18) zur Aufnahme der Wicklung, zur Befestigung eines Anschlussterminals (38) und zur Führung der Verschaltdrähte (32) und Isolation gegen den Rückschlussring (14) bestückt werden.

7. Verfahren nach einem der Ansprüche 1 bis 7, **dadurch gekennzeichnet, dass** das Bewickeln der Pole (10) und das Verschalten der gewickelten Spulen (28) im gleichen Arbeitsgang durchgeführt wird.

8. Verfahren nach einem der Ansprüche 1 bis 6, **dadurch gekennzeichnet, dass** das Verschalten der gewickelten Spulen (28) und das Verschweissen von Anschlussdrähten nach dem Bewickeln der Pole (10) im Hilfswerkzeug (40) durchgeführt wird.

9. Verfahren nach Anspruch 7, **dadurch gekennzeichnet, dass** das Verschweissen von Anschlussdrähten im Hilfswerkzeug in einer separaten Arbeitsstation durchgeführt wird.

## Claims

1. Method for winding a multipole stator, which is equipped with inwardly pointing poles (10), of an electrical machine, in which method wire coils (28) are wound around the individual poles (10), and the wound poles (10) are subsequently pressed into a magnetic return path ring (14), **characterized in that** the poles (10) are fixed, prior to the winding operation, to the inner side of an auxiliary tool (40), which is designed so as to correspond approximately to the magnetic return path ring (14), the auxiliary tool (40) having a larger inner diameter (d_{H}) than the inner diameter (d_{R}) of the magnetic return path ring (14), the poles (10) held in the auxiliary tool (40) being wound, and, after the winding operation, the poles (10) being taken out of the auxiliary tool (40) using an auxiliary device, being displaced radially inwards into the position corresponding to the arrangement of the poles (10) provided in the magnetic return path ring (14) and then being inserted into the magnetic return path ring (14).

2. Method according to Claim 1, **characterized in that** the winding of the poles (10) is carried out using a needle winding method.

3. Method according to Claim 1 or 2, **characterized in that** slots (42), which are undercut parallel to an auxiliary tool axis (z'), for accommodating a spring part (12) protruding from the poles (10) are arranged in the auxiliary tool (40), and the poles (10) are inserted by the spring parts (12) being pushed into the slots (42) from the end side of the auxiliary tool (40) parallel to the auxiliary tool axis (z').

4. Method according to Claim 3, **characterized in that** guide grooves (16), which are undercut parallel to the stator axis (z), for accommodating the spring part (12) protruding from the poles (10) are arranged in the magnetic return path ring (14), and the poles (10) are inserted by the spring parts (12) being pressed into the guide grooves (16) from an end side of the magnetic return path ring (14) parallel to the stator axis (z).

5. Method according to Claims 3 and 4, **characterized in that** the slots or guide grooves (16, 42) and the spring parts (12) of the poles (10) have a dove-tailed cross section.

6. Method according to one of Claims 1 to 5, **characterized in that** the poles (10), prior to being inserted into the auxiliary tool (40), are equipped with a coil former (18) for accommodating the winding, for fixing a connection terminal (38) and for guiding the connecting wires (32) and insulation with respect to the magnetic return path ring (14).

7. Method according to one of Claims 1 to 6, **characterized in that** the winding of the poles (10) and the connection of the wound coils (28) are carried out in the same working step.

8. Method according to one of Claims 1 to 6, **characterized in that** the connection of the wound coils (28) and the welding of connecting wires are carried out once the poles (10) have been wound in the auxiliary tool (40).

9. Method according to Claim 7, **characterized in that** the welding of connecting wires is carried out in the auxiliary tool in a separate working station.

## Revendications

1. Procédé d'enroulement d'un stator multipolaire d'une machine électrique, muni de pôles (10) tournés vers l'intérieur, dans lequel procédé des bobines de fil (28) sont enroulées autour des pôles individuels (10) et les pôles bobinés (10) sont ensuite enfoncés dans une culasse annulaire (14),
**caractérisé en ce que**
les pôles (10) sont fixés avant l'opération d'enroulement sur le côté intérieur d'un outil auxiliaire (40) placé de manière correspondant approximativement à la culasse annulaire (14), l'outil auxiliaire (40) présentant un diamètre intérieur (d_{H}) plus grand que le diamètre intérieur (d_{R}) de la culasse annulaire (14), les pôles (10) retenus dans l'outil auxiliaire (40) étant bobinés, les pôles (10) étant ressortis après l'opération d'enroulement à l'aide d'un dispositif auxiliaire hors de l'outil auxiliaire (40), enfoncés radialement vers l'intérieur dans la position correspondant à l'agencement des pôles (10) prévu dans la culasse annulaire (14) et étant ensuite insérés dans la culasse annulaire (14).

2. Procédé selon la revendication 1, **caractérisé en ce que** le bobinage des pôles (10) est réalisé avec un procédé d'enroulement à aiguilles.

3. Procédé selon la revendication 1 ou 2, **caractérisé en ce que** des rainures longitudinales (42) en contre-dépouille dans l'outil auxiliaire (40) parallèlement à un axe de l'outil auxiliaire (z') sont prévues pour recevoir une partie de ressort (12) saillant hors des pôles (10) et l'insertion des pôles (10) s'effectue par enfoncement des parties de ressort (12) dans les rainures longitudinales (42) depuis le côté frontal de l'outil auxiliaire (40) parallèlement à l'axe de l'outil auxiliaire (z').

4. Procédé selon la revendication 3, **caractérisé en ce que** des rainures de guidage (16) en contre-dépouille dans la culasse annulaire (14) parallèlement à l'axe du stator (z) sont prévues pour recevoir la partie de ressort (12) saillant hors des pôles (10) et l'insertion des pôles (10) s'effectue en pressant les parties de ressort (12) dans les rainures de guidage (16) depuis un côté frontal de la culasse annulaire (14) parallèlement à l'axe du stator (z).

5. Procédé selon la revendication 3 ou 4, **caractérisé en ce que** les rainures longitudinales ou de guidage (16, 42) et les parties de ressort (12) des pôles (10) présentent une section transversale en forme de queue d'aronde.

6. Procédé selon l'une quelconque des revendications 1 à 5, **caractérisé en ce que** les pôles (10), avant l'insertion dans l'outil auxiliaire (40) sont pourvus d'un corps de bobine (18) pour recevoir l'enroulement, pour la fixation d'une borne de raccordement (38) et pour le guidage des fils de branchement (32) et l'isolation vis-à-vis de la culasse annulaire (14).

7. Procédé selon l'une quelconque des revendications 1 à 6, **caractérisé en ce que** le bobinage des pôles (10) et le branchement des bobines enroulées (28) sont effectués dans la même phase de travail.

8. Procédé selon l'une quelconque des revendications 1 à 6, **caractérisé en ce que** le branchement des bobines enroulées (28) et le soudage des fils de raccordement sont effectués après le bobinage des pôles (10) dans l'outil auxiliaire (40).

9. Procédé selon la revendication 7, **caractérisé en ce que** le soudage des fils de raccordement est effectué dans l'outil auxiliaire dans un poste de travail séparé.
